# EUROPEAN PATENT SPECIFICATION

(11) **EP 4 265 581 B1**
(45) Date of publication and mention of the grant of the patent: **04.06.2025**
(21) Application number: 22020183.4
(22) Date of filing: 20.04.2022
(51) Int. Cl.: C04B 7/36

(54) **METHOD OF PROCESSING EXHAUST GAS FROM A CEMENT PLANT**
VERFAHREN ZUM BEHANDELN VON ABGAS AUS EINER ZEMENTANLAGE
PROCÉDÉ DE TRAITEMENT DE GAZ D'ÉCHAPPEMENT À PARTIR D'UNE INSTALLATION DE CIMENT

(43) Date of publication of application: 25.10.2023
(73) Proprietor: Holcim Technology Ltd, 6300 Zug (CH)
(72) Inventor: Butler, Maxime, 38070 Saint-Quentin-Fallavier (FR); Stoffel, Beat, 5113 Holderbank (CH); Weber, Mirko, 5113 Holderbank (CH)
(74) Representative: SONN Patentanwälte GmbH & Co KG

(56) References cited:
- CN-A- 107 019 991
- JP-A- 2008 239 359

## Description

The invention relates to a method of processing exhaust gas from a cement plant, the cement plant comprising one or several raw meal mills for milling a cement raw meal, one or several preheater strings, each having a plurality of preheater stages, and a rotary kiln, wherein the one or several preheater strings are for preheating the cement raw meal in counter-current flow with an exhaust gas from the rotary kiln.

Further, the invention relates to a cement production unit for carrying out such a method, comprising:
- one or several preheater strings for preheating cement raw meal, each preheater string comprising a plurality of preheater stages,
- a rotary kiln, and optionally a pre-calciner, for calcining the pre-heated cement raw meal and obtain cement clinker.

In known processes for producing cement clinker, raw meal is fed into a calcination device, in particular a rotary kiln, after it has been preheated and partially decarbonated in a multistage preheater system by using the heat of combustion gases exhausted from the rotary kiln. The preheated raw material is fed into the rotary kiln via the kiln inlet and travels to the kiln outlet while being calcined at temperatures of up to 1400°C.

Carbon dioxide (CO₂) is the most significant long-lived greenhouse gas in the Earth's atmosphere. The use of fossil fuels and deforestation have rapidly increased its concentration in the atmosphere, leading to global warming. Carbon dioxide also causes ocean acidification, because it dissolves in water to form carbonic acid.

The cement industry is an important emitter of CO₂. Within the cement production process, significant amounts of CO₂ are generated during the decarbonation of raw meal (containing CaCO₃) to lime (CaO). During the production of Portland cement clinker about 0,9 tons of CO₂ per ton of Portland cement clinker are emitted by the calcination of the raw materials and from the fuel combustion in the rotary kiln and the calciner.

The use of alternative fuels, in particular renewable fuels, in the rotary kiln burner may reduce the amounts of greenhouse gases. However, substantial amounts, roughly two thirds, of CO₂ are still produced by the decarbonation of raw meal and emitted into the atmosphere.

It has been proposed to use carbon capture and sequestration methods in order to reduce or prevent the emission of CO₂ from industrial processes into the atmosphere. Such methods comprise capturing CO₂ from flue gases for storage or for use in other industrial applications.

Several technologies have been developed to extract and capture CO₂ from such flue gases in order to allow carbon sequestration. A known technology for capturing CO₂ present in flue gases is amine scrubbing, or other chemicals such as potassium carbonate. This process consists of extracting the CO₂ fraction from a post-combustion flue gas by flushing the gases with an amine solvent, regenerating the solvent by steam stripping, thus releasing nearly pure CO₂, and recycling the stripped solvent to the absorber. Although this technology is very efficient, it is also quite energy intensive.

Alternatively, CO₂ can be physically separated from a CO₂ containing gas by means of adsorbents, or membranes.

Once extracted from the CO₂ containing gas, CO₂ can be stored in different ways, such as, e.g., in stable carbonate mineral forms. The respective process is known as "carbon sequestration by mineral carbonation". The process involves reacting carbon dioxide with a carbonatable solid material, said material comprising metal oxides, in particular magnesium oxide (MgO) or calcium oxide (CaO), to form stable carbonates.

Alternatively, the CO₂ extracted can be used as feedstock to produce biofuels, other hydrocarbons, or sequestrated.

In order to reduce or prevent the emission of CO₂ into the atmosphere, post combustion carbon capture such as amine scrubbing is usually applied at the stack (end of pipe) before the CO₂ being emitted. However, it has been observed that the CO₂ content of the exhaust gas of a cement plant at the exhaust stack is often too low for allowing an efficient and cost-effective CO₂ removal, e.g. by means of a carbon capture installation.

JP 2008 239359 discloses a method of recovering carbon dioxide in a cement firing equipment that is provided with a step for cooling the waste gas from a suspension preheater, a step for eliminating steam in the suspension preheater waste gas using a gas cooling, moisture reducing and dust removing apparatus, a step for liquefying carbon dioxide in the suspension preheater waste gas using a carbon dioxide liquefaction apparatus and a step for circulating and utilizing a part of the suspension preheater waste gas as a cooling gas for a clinker cooler using a circulation line. This document describes cooling the exhaust gas in heat exchange with a water circulation line that is connected with a waste heat power generator that generates electricity.

Therefore, the instant invention aims at further reducing the CO₂ footprint of a cement plant and to increase the efficiency of CO₂ removal from the exhaust gas of a cement manufacturing plant.

In order to achieve these objectives, the invention provides a method of processing exhaust gas from a cement plant, wherein the method comprises:
- extracting the exhaust gas from a second highest or highest stage of at least one of the one or several preheater strings,
- cooling the exhaust gas to a temperature of < 250°C,
- dedusting the exhaust gas,
- introducing the cooled and dedusted exhaust gas into a carbon capture installation, in which CO₂ is separated from the exhaust gas for obtaining a CO₂ lean gas,
   wherein the exhaust gas, when being introduced into the carbon capture installation, has a CO₂-content of > 25 vol.-%, preferably > 30 vol.-%
   wherein said step of cooling the exhaust gas comprises causing the exhaust gas to flow through a heat exchanger, in which the exhaust gas is cooled in heat exchange with the CO₂ lean gas that is being heated.

The invention is based on the idea to extract the exhaust gas from the cement plant at a considerable upstream distance from the exhaust gas stack. More specifically, the exhaust gas is taken from a downstream end region of the preheater string, i.e. from the second highest or highest stage of the preheater string, where the CO₂ content of the exhaust gas is substantially higher than at the exhaust stack. This is mainly due to the unavoidable amounts of false air ingress in the cement process between the preheater string and the exhaust gas stack, which dilutes the CO₂ in the exhaust gas. Typically, the CO₂ content of the exhaust gas is < 22 dry vol.-% at the exhaust stack, compared to 30-40 dry vol.-% directly after the preheater string. A high CO₂ content significantly increases the efficiency of the carbon capture process.

On the other hand, the invention avoids extracting exhaust gas that has a disadvantageously high temperature, such as directly after the rotary kiln or from a lower stage of the preheater. For example, extracting the exhaust gas from a lower stage of the preheater string would complicate the cooling step that is required for being able to process the exhaust gas in a carbon capture installation. In particular, the high temperature of the exhaust gas and the presence of sticky dust would make cooling in a heat exchanger very challenging. Extracting the exhaust gas at an upper stage of the preheater string, where the temperature of the exhaust gas is lower than at a lower stage also minimises the heat loss in the preheater string. It is more advantageous to use as much heat as possible to pre-heat the raw material in the preheater string than adding up a complex heat recovery system for recovering the heat of the gas and transferring it to the raw material.

As used herein, the term "extracting exhaust gas from the second highest or highest stage of the preheater string" is understood to refer to the process of taking up to 100% of the exhaust gas that flows through the second highest and/or highest stage of the preheater string and guiding the exhaust gas to a subsequent installation. This comprises embodiments, in which the exhaust gas is extracted from between the highest stage and the second highest stage of the preheater string.

If a conventional cement plant is adapted to carry out the invention, the extraction of the exhaust gas may be realized as follows. In conventional designs, the exhaust gas coming from the uppermost stage of the preheater string is guided through a kiln fan, is subsequently cooled in a conditioning tower and then introduced into the raw meal mill to dry cement raw meal. Here, the extraction of the exhaust gas is carried out by installing a junction in the existing tubing so as to divert the exhaust gas from the existing tubing at the second highest stage or at a location downstream of the second highest stage of the preheater string, such as between the uppermost stage of the preheater and the kiln fan, or between the kiln fan and the raw meal mill.

In any way, the exhaust gas may be extracted from any location between the second highest stage of the preheater string and the exhaust stack, as long as the extracted exhaust gas that is introduced into the carbon capture installation, has a CO₂-content of > 25 vol.-%, preferably > 30 vol.-%.

In order to further increase the energy efficiency of the overall process, the invention provides that the CO₂ lean gas leaving the carbon capture installation is optionally introduced into the raw meal mill for using the sensible heat of the CO₂ lean gas to dry the cement raw meal. The drying of the raw meal with the CO₂ lean gas is particularly effective, since the CO₂ lean gas taken from the carbon capture installation is dry.

The CO₂ lean gas, after having been used in the raw meal mill to dry the raw meal, may advantageously be released into the atmosphere. Therefore, a preferred embodiment of the invention provides for a step of extracting the CO₂ lean gas from the raw meal mill and discharging it through an exhaust stack of the cement plant.

The carbon capture installation used within the context of the instant invention may be any installation that is able to separate CO₂ from the CO₂ containing exhaust gas by any means known in the art, in order to provide a CO₂ lean gas. In practice, a complete removal of CO₂ from the exhaust gas may not always be possible. Therefore, the term "CO₂ lean gas" shall not be understood to refer to the total absence of any CO₂ molecule. As used herein, a CO₂ lean gas is understood to be a gas that contains less than 5 vol.% of CO₂, preferably less than 3 vol.% of CO₂.

The carbon capture installation may further comprise a dedusting unit, and a gas cooler in order to treat the gas.

Any carbon capture technology is suitable for the present invention. As an illustration, the following can be cited:
- Chemical absorption with, e.g. amines or carbonate based solvent. These technologies use the ability of certain molecules to bind with CO₂ under certain conditions (typically under ambient temperature) and to unbind under different conditions (typically higher temperature). The process consists in looping the chemical from one condition to the other in order to first capture the CO₂ from the cement plant's exhaust gas in an absorber column and then unbind the CO₂ from the chemical to collect it in a pure form in a desorber (or stripper) using thermal energy. In this technology, the increase of the cement exhaust gas' CO₂ content reduces the exhaust gas flow.
- Pressure Swing Adsorption (PSA) or combination of PSA and cryogenic purification. This technology uses the PSA as a pre-concentrator to increase the CO₂ content of the gas (rich CO₂ gas) which is then optionally fed into a cryogenic section that purifies the CO₂. The separation of the CO₂ in the PSA is driven by the compression of the exhaust gas which is considerably reduced when the CO₂ concentration increases, hence improving the energy efficiency of the capture process. In addition to the rich CO₂ gas, the PSA also exhausts a CO₂ lean and dry gas. Alternatively, a Vacuum Swing Adsorption (VSA) or a Vacuum Pressure Swing Adsorption (VPSA) could be used as the pre-concentrator instead of the PSA.
- Membranes or combination of membranes and cryogenic purification. This technology uses membranes as pre-concentrator to increase the CO₂ content of the gas (rich CO₂ gas) which is then optionally fed into a cryogenic section that purifies the CO₂. The separation of the CO₂ in the membrane is driven by the compression of the exhaust gas or by the vacuum pumping of the rich CO₂ gas on the permeate side of the membranes. This compression energy is considerably reduced when the CO₂ content increases, hence improving the energy efficiency of the capture process. In addition to the rich CO₂ gas, the membranes also exhaust a CO₂ lean and dry gas.

According to the invention, the exhaust gas, when being introduced into the carbon capture installation, has a CO₂-content of > 25 vol.-%, preferably > 30 vol.-%, expressed as a volume percentage of the dry gas. For example, the exhaust gas may have the following composition:
- > 25 vol.-% CO₂
- 1-7 vol.-% O₂ (residual from calcination process, plus possible air coming in from outside, i.e. false air)
- the rest being N₂ (approx. 50-70 vol.-%) and argon (approx. 1 vol.-%)

The invention may also be used in a cement manufacturing plant that is operated in an oxygen enriched mode, also called oxyfuel mode. In the oxyfuel mode, oxygen and recycled flue gas replace the conventional combustion air up to 100% in the calciner and/or the rotary kiln of the cement manufacturing plant, so as to directly generate an exhaust gas that has an increased CO₂ content, since nitrogen is not present any more as a diluent of the carbon dioxide produced. This further reduces the costs of separating CO₂ in the carbon capture installation.

According to a preferred embodiment, the entire flow of exhaust gas leaving the preheater string is subjected to the cooling and the dedusting steps and introduced into the carbon capture installation. Alternatively, only a partial flow of the exhaust gas leaving the preheater string is subjected to the cooling and dedusting steps and introduced into the carbon capture installation. The remaining flow of the exhaust gas leaving the preheater string will in this case be guided to the exhaust stack in accordance with the conventional plant layout, namely, in this sequence, via the kiln fan, the conditioning tower, the raw meal mill and the exhaust stack.

As mentioned before, the exhaust gas leaving the preheater string shall be cooled to a temperature of < 250°C, in order to be suitable for being processed in the carbon capture installation. The cooling step may preferably be configured to cool the exhaust gas leaving the preheater string to a temperature of < 150°C, such as to a temperature of approx. 140°C.

Accordingly, the exhaust gas, when entering the carbon capture installation has a temperature of < 250°C, preferably < 150°C.

In the dedusting step of the method according to the invention, solid particles contained in the exhaust gas may be removed from the exhaust gas by use of a particle filter to produce a clean gas flow. The dedusting step may be arranged upstream of the cooling unit or downstream of the cooling unit, but in any case, upstream of the carbon capture installation.

A particularly high thermal efficiency is achieved, if, in accordance with the invention, said step of cooling the exhaust gas comprises causing the exhaust gas to flow through a heat exchanger, in which the exhaust gas is cooled in heat exchange with the CO₂ lean gas that is being heated, preferably before being introduced into the raw meal mill. Therefore, the thermal energy retrieved from the exhaust gas during the cooling step is re-used to heat the CO₂ lean gas that is coming from the carbon capture installation to a temperature that is suitable for drying cement raw meal in the raw meal mill. Preferably, the CO₂ lean gas is heated to a temperature of > 250°C.

The heat exchanger is preferably designed as a waste heat recovery exchanger. Optionally, the CO₂ lean gas may be subjected to an additional heating step before being introduced into the raw meal mill. Said additional heating may be carried out, e.g., in an electric heater. The additional heating step may be arranged upstream of the heat exchanger or preferably downstream of the heat exchanger.

The heating requirement in the heat exchanger may vary depending on the set up of the cement plant and the humidity in the raw meal. In some cases, the CO₂ lean gas may not be needed to dry the raw meal and could be evacuated to the stack. In other cases, the CO₂ lean gas could be used without heating. In other cases, the CO₂ lean gas is preferably heated in the heat exchanger, but no additional heating step is required to dry the raw meal. In other cases, it may be necessary to heat the CO₂ lean gas in the heat exchanger and further heat in an additional heater to dry the raw meal.

Alternatively, the clinker cooler waste air could be used to dry the raw meal.

Alternatively, atmospheric air could be used in addition or in replacement of the CO₂ lean gas to cool down the exhaust gas. Therefore, the thermal energy recovered by the atmospheric air and optionally the CO₂ lean gas could be used to dry the raw meal.

Furthermore, the embodiments above relating to the heating requirements can be combined.

According to another aspect, the invention refers to a cement production unit for carrying out a method according to the invention, wherein the device comprises:
- one or several preheater strings for preheating cement raw meal, each preheater string comprising a plurality of preheater stages,
- a rotary kiln, and optionally a pre-calciner, for calcining the pre-heated cement raw meal and obtain cement clinker,
- a cooling unit, a dedusting unit and a carbon capture installation that are connected to at least one of the one or several preheater strings in order to extract exhaust gas from a second highest or highest stage of the at least one of the one or several preheater strings, to cool and dedust the exhaust gas and to introduce the cooled and dedusted exhaust gas into the carbon capture installation, in which CO₂ is separated from the exhaust gas for obtaining a CO₂ lean gas, wherein the cooling unit is designed as a heat exchanger, in which the exhaust gas is cooled in heat exchange with the CO₂ lean gas that is being heated.

Optionally, the cement production unit may further comprise one or several raw meal mills for milling a cement raw meal, wherein an outlet line of the carbon capture installation is connected to at least one of the one or several cement raw mills for introducing the CO₂ lean gas from the carbon capture installation into the at least one of the one or several raw meal mills.

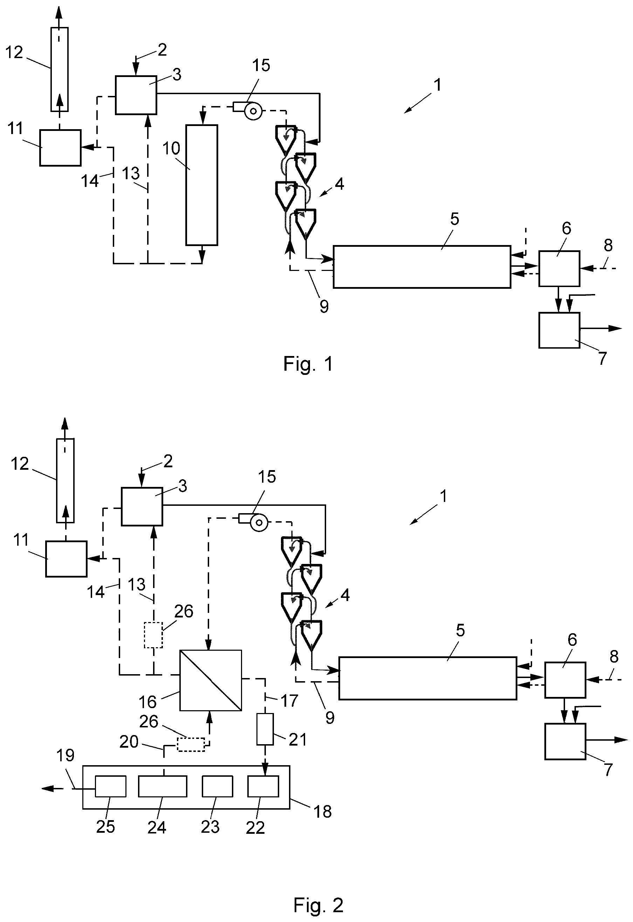

The invention will now be described in more detail with reference to the attached drawings. Therein, Fig. 1 shows a layout of a cement plant as commonly used and Fig. 2 shows a layout of a cement plant for carrying out the method of the invention.

Fig. 1 schematically illustrates a cement plant, in which raw meal 2 is ground in a raw meal mill 3 and the ground raw meal is charged into a preheater string 4, where it is preheated in counter-current to the hot exhaust gases 9 coming from a rotary clinker kiln 5. The preheater string 4 comprises a plurality of interconnected preheaters, such as cyclone suspension-type preheaters. The preheated and optionally pre-calcined raw meal is then introduced into the rotary kiln 5, where it is calcined to obtain cement clinker. The clinker leaves the rotary kiln 5 and is cooled in a clinker cooler 6. The cooled clinker is charged into a cement mill 7, where the clinker is ground to a desired fineness, optionally together with other components of the final product, such as supplementary cementitious substances and gypsum.

In Fig. 1, the flow of solid material is shown with solid lines, while the flow of gas is shown with dotted lines. It can be seen that cooling air 8 is introduced into the clinker cooler 6, where the air is heated in heat exchange with the clinker. The heated air leaving the clinker cooler 6 is introduced into the rotary kiln 5, where the preheated raw meal is calcined, i.e. decarbonated, while releasing CO₂. The CO₂ enriched exhaust gas 9 is introduced into the preheater string 4 in order to preheat the raw meal. The exhaust gas withdrawn from the preheater string 4 is introduced into a gas conditioning tower 10 via the kiln ID (induced draft) fan 15, where water may be injected in order to cool the exhaust gas. In a typical operation mode, the cooled exhaust gas may be introduced into the raw meal mill 3 via the line 13 for preheating the raw meal and further cooling the exhaust gas. The exhaust gas leaving the raw meal mill is loaded with fine particles of raw meal and is introduced into the main filter 11 for separating said fine particles from the exhaust gas. The exhaust gas is withdrawn from the main filter 11 and directed through an exhaust stack 12.

If the raw meal mill 3 is not in operation, the cooled exhaust gas coming from the gas conditioning tower 10 is directly led to the main filter 11 via the line 14, where cement kiln dust entrained from rotary kiln 5 is separated from the exhaust gas.

Fig. 2 shows a cement plant layout for carrying out the invention. In Fig. 2, the cement plant 1 of Fig. 1 has been adapted with respect to the exhaust gas that leaves the preheater 4 via the kiln ID fan 15. Instead of directing this exhaust gas directly through the conditioning tower 10 and then into the raw meal mill 3, the exhaust gas taken from the uppermost stage of the preheater 4 is first cooled in a heat exchanger 16 to a temperature of < 180°C, and then introduced via line 17 and a filter 21 into a carbon capture installation 18, in which CO₂ is separated from the exhaust gas for obtaining an essentially CO₂ lean gas and substantially pure CO₂ 19. The CO₂ lean gas is directed to the raw meal mill 3 via line 20 and the heat exchanger 16, and used in the raw meal mill 3 to dry the cement raw meal. In the heat exchanger 16 the CO₂ lean gas is heated in heat exchange with the exhaust gas that comes from the preheater 4.

In an exemplary embodiment, the carbon capture installation 18 comprises a Direct Contact Cooler 22 to further cool down the exhaust gas and remove the minor impurities like acids (SOx, HCl, HF,...), a dryer 23, a CO₂ pre-concentrator 27, and a CO₂ purification unit 25. The CO₂ pre-concentrator may be configured to separate CO₂ from the exhaust gas by pressure swing adsorption (PSA), vacuum swing adsorption (VSA) or membranes.

The CO₂ lean gas leaving the carbon capture installation 18 is a gas that contains substantially no CO₂ and no H₂O. It substantially consists of N₂ and O₂.

Optionally, an additional heater 26 may be installed upstream or downstream of the heat exchanger 16, in order to further increase the temperature of the CO₂ lean gas before introducing it into the raw meal mill 3.

## Claims

1. A method of processing exhaust gas from a cement plant, the cement plant comprising one or several raw meal mills for milling a cement raw meal, one or several preheater strings, each having a plurality of preheater stages, and a rotary kiln, wherein the one or several preheater strings are for preheating the cement raw meal in counter-current flow with an exhaust gas from the rotary kiln, wherein the method comprises:
- extracting the exhaust gas from a second highest or highest stage of at least one of the one or several preheater strings,
- cooling the exhaust gas to a temperature of < 250°C,
- dedusting the exhaust gas,
- introducing the cooled and dedusted exhaust gas into a carbon capture installation, in which CO₂ is separated from the exhaust gas for obtaining a CO₂ lean gas,
wherein the exhaust gas, when being introduced into the carbon capture installation, has a CO₂-content of > 25 vol.-%, preferably > 30 vol.-%
wherein said step of cooling the exhaust gas comprises causing the exhaust gas to flow through a heat exchanger, in which the exhaust gas is cooled in heat exchange with the CO₂ lean gas that is being heated.

2. Method according to claim 1, further comprising introducing the CO₂ lean gas into at least one of the one or several raw meal mills and using the CO₂ lean gas in the at least one of the one or several raw meal mills to dry the cement raw meal.

3. Method according to claim 2, further comprising extracting the CO₂ lean gas from the at least one of the one or several raw meal mills and discharging it through an exhaust stack of the cement plant.

4. Method according to claim 1, 2 or 3, wherein the entire flow of exhaust gas leaving the at least one of the one or several preheater strings is subjected to the cooling step and introduced into the carbon capture installation.

5. Method according to any one of claims 1 to 4, wherein the CO₂ lean gas, after having been heated in the heat exchanger, is introduced into the at least one of the one or several raw meal mills.

6. Method according to claim 5, wherein the CO₂ lean gas is subjected to an additional heating step before being introduced into the at least one of the one or several raw meal mills.

7. A cement production unit for carrying out a method according to any one of claims 1 to 6, comprising:
- one or several preheater strings for preheating cement raw meal, each preheater string comprising a plurality of preheater stages,
- a rotary kiln, and optionally a pre-calciner, for calcining the pre-heated cement raw meal and obtain cement clinker,
- a cooling unit, a dedusting unit and a carbon capture installation that are connected to at least one of the one or several preheater strings in order to extract exhaust gas from a second highest or highest stage of the at least one of the one or several preheater strings, to cool and dedust the exhaust gas and to introduce the cooled and dedusted exhaust gas into the carbon capture installation, in which CO₂ is separated from the exhaust gas for obtaining a CO₂ lean gas, wherein the cooling unit is designed as a heat exchanger, in which the exhaust gas is cooled in heat exchange with the CO₂ lean gas that is being heated.

8. Cement production unit according to claim 7, further comprising one or several raw meal mills for milling a cement raw meal, wherein an outlet line of the carbon capture installation is connected to at least one of the one or several cement raw mills for introducing the CO₂ lean gas from the carbon capture installation into the at least one of the one or several raw meal mills.

9. Cement production unit according to claim 7 or 8, wherein the CO₂ lean gas, after having been heated, is introduced into the at least one of the one or several raw meal mills.

10. Cement production unit according to claim 9, wherein an additional heat exchanger is provided for heating the CO₂ lean gas before being introduced into the at least one of the one or several raw meal mills.

## Patentansprüche

1. Verfahren zur Verarbeitung von Abgas aus einem Zementwerk, wobei das Zementwerk eine oder mehrere Rohmehlmühlen zum Mahlen eines Zementrohmehls, einen oder mehrere Vorwärmstränge mit jeweils mehreren Vorwärmstufen und einen Drehrohrofen aufweist, wobei der eine oder die mehreren Vorwärmstränge zum Vorwärmen des Zementrohmehls im Gegenstrom mit einem Abgas aus dem Drehrohrofen dienen, wobei das Verfahren umfasst:
- Entnahme des Abgases aus einer zweithöchsten oder höchsten Stufe von mindestens einem des einen oder der mehreren Vorwärmstränge,
- Kühlung des Abgases auf eine Temperatur von < 250°C,
- Entstaubung des Abgases,
- Einleiten des gekühlten und entstaubten Abgases in eine Kohlenstoffabscheidungsanlage, in der CO₂ aus dem Abgas abgetrennt wird, um ein CO₂-armes Gas zu erhalten, wobei das Abgas beim Einleiten in die Kohlenstoffabscheidungsanlage einen CO₂-Gehalt von > 25 Vol.-%, bevorzugt > 30 Vol.-% aufweist
wobei der Schritt der Kühlung des Abgases umfasst, dass das Abgas durch einen Wärmetauscher strömt, in dem das Abgas im Wärmeaustausch mit dem CO₂-armen Gas, das erwärmt wird, gekühlt wird.

2. Verfahren nach Anspruch 1, ferner umfassend das Einleiten des CO₂-armen Gases in mindestens eine der einen oder mehreren Rohmehlmühlen und die Verwendung des CO₂-armen Gases in der mindestens einen der einen oder mehreren Rohmehlmühlen zur Trocknung des Zementrohmehls.

3. Verfahren nach Anspruch 2, ferner umfassend die Entnahme des CO₂-armen Gases aus mindestens einer der einen oder mehreren Rohmehlmühlen und Ableiten über einen Abgaskamin des Zementwerks.

4. Verfahren nach Anspruch 1, 2 oder 3, wobei der gesamte Abgasstrom, der den mindestens einen der einen oder mehreren Vorwärmstränge verlässt, dem Kühlschritt unterzogen und in die Kohlenstoffabscheidungsanlage eingeleitet wird.

5. Verfahren nach einem der Ansprüche 1 bis 4, wobei das CO₂-arme Gas nach Erwärmung im Wärmetauscher in mindestens eine der einen oder mehreren Rohmehlmühlen eingeleitet wird.

6. Verfahren nach Anspruch 5, wobei das CO₂-arme Gas vor der Einleitung in die mindestens eine der einen oder mehreren Rohmehlmühlen einem zusätzlichen Erwärmungsschritt unterzogen wird.

7. Zementherstellungsanlage zur Durchführung eines Verfahrens nach einem der Ansprüche 1 bis 6, umfassend:
- einen oder mehrere Vorwärmstränge zum Vorwärmen von Zementrohmehl, wobei jeder Vorwärmstrang mehrere Vorwärmstufen aufweist,
- einen Drehrohrofen und gegebenenfalls einen Vorkalzinator zum Kalzinieren des vorgewärmten Zementrohmehls und zur Gewinnung von Zementklinker,
- eine Kühleinheit, eine Entstaubungseinheit und eine Kohlenstoffabscheidungsanlage, die mit mindestens einem der einen oder mehreren Vorwärmstränge verbunden sind, um Abgas aus einer zweithöchsten oder höchsten Stufe des mindestens einen der einen oder mehreren Vorwärmstränge abzuleiten, das Abgas zu kühlen und zu entstauben und das gekühlte und entstaubte Abgas in die Kohlenstoffabscheidungsanlage einzuleiten, in der CO₂ aus dem Abgas abgetrennt wird, um ein CO₂-armes Gas zu erhalten, wobei die Kühleinheit als Wärmetauscher ausgebildet ist, in dem das Abgas im Wärmeaustausch mit dem erwärmten CO₂-armen Gas gekühlt wird.

8. Zementherstellungsanlage nach Anspruch 7, ferner umfassend eine oder mehrere Rohmehlmühlen zum Mahlen von Zementrohmehl, wobei eine Auslassleitung der Kohlenstoffabscheidungsanlage mit mindestens einer der einen oder mehreren Zementrohmehlmühlen verbunden ist, um das CO₂-arme Gas aus der Kohlenstoffabscheidungsanlage in die mindestens eine der einen oder mehreren Rohmehlmühlen einzuleiten.

9. Zementherstellungsanlage nach Anspruch 7 oder 8, wobei das CO₂-arme Gas nach dem Erwärmen in die mindestens eine der einen oder mehreren Rohmehlmühlen eingeleitet wird.

10. Zementherstellungsanlage nach Anspruch 9, wobei ein zusätzlicher Wärmetauscher zur Erwärmung des CO₂-armen Gases vor der Einleitung in die mindestens eine der einen oder mehreren Rohmehlmühlen vorgesehen ist.

## Revendications

1. Procédé de traitement des gaz d'échappement d'une cimenterie, la cimenterie comprenant un ou plusieurs broyeurs de cru pour le broyage de la farine brute de ciment, une ou plusieurs chaînes de préchauffage, chacune ayant une pluralité d'étapes de préchauffage, et un four rotatif, dans lequel la une ou plusieurs chaînes de préchauffage sont destinées à préchauffer la farine brute de ciment à contre-courant avec un gaz d'échappement du four rotatif, dans lequel le procédé comprend:
- extraire les gaz d'échappement d'une étape la plus élevée ou la deuxième plus élevée d'au moins une des une ou plusieurs chaînes de préchauffage,
- refroidir les gaz d'échappement à une température de < 250°C,
- dépoussiérer les gaz d'échappement,
- introduire les gaz d'échappement refroidis et dépoussiérés dans une installation de capture du carbone, dans laquelle le CO₂ est séparé des gaz d'échappement pour obtenir un gaz pauvre en CO₂, dans laquelle les gaz d'échappement, lorsqu'ils sont introduits dans l'installation de capture du carbone, ont une teneur en CO₂ > 25 % en volume, de préférence > 30 % en volume,
dans lequel ladite étape de refroidissement des gaz d'échappement comprend la circulation des gaz d'échappement à travers un échangeur de chaleur, dans lequel les gaz d'échappement sont refroidis en échange de chaleur avec le gaz pauvre en CO₂ qui est chauffé.

2. Procédé selon la revendication 1, comprenant en outre l'introduction du gaz pauvre en CO₂ dans au moins l'un des un ou plusieurs broyeurs de cru et l'utilisation du gaz pauvre en CO₂ dans au moins l'un des un ou plusieurs broyeurs de cru pour sécher la farine brute de ciment.

3. Procédé selon la revendication 2, comprenant en outre l'extraction du gaz pauvre en CO₂ de l'au moins un des un ou plusieurs broyeurs de cru et son évacuation à travers une cheminée d'évacuation de la cimenterie.

4. Procédé selon la revendication 1, 2 ou 3, dans lequel le flux total des gaz d'échappement quittant l'au moins une de la ou des chaînes de préchauffage est soumise à l'étape de refroidissement et introduite dans l'installation de capture de carbone.

5. Procédé selon l'une des revendications 1 à 4, dans lequel le gaz pauvre en CO₂, après avoir été chauffé dans l'échangeur de chaleur, est introduit dans l'au moins un ou plusieurs broyeurs de cru.

6. Procédé selon la revendication 5, dans lequel le gaz pauvre en CO₂ est soumis à une étape de chauffage supplémentaire avant d'être introduit dans l'au moins un ou plusieurs broyeurs de cru.

7. Unité de production de ciment pour la mise en œuvre d'un procédé selon l'une des revendications 1 à 6, comprenant:
- une ou plusieurs chaînes de préchauffage pour préchauffer la farine brute de ciment, chaque chaîne de préchauffage comprenant une pluralité d'étapes de préchauffage,
- un four rotatif, et éventuellement un précalcinateur, pour calciner la farine brute de ciment préchauffée et obtenir du clinker de ciment,
- une unité de refroidissement, une unité de dépoussiérage et une installation de capture de carbone qui sont connectées à au moins une des une ou plusieurs des chaînes de préchauffage afin d'extraire les gaz d'échappement d'une étape la plus élevée ou la deuxième plus élevée de l'au moins une des une ou plusieurs chaînes de préchauffage, de refroidir et de dépoussiérer le gaz d'échappement et d'introduire le gaz d'échappement refroidi et dépoussiérés dans l'installation de capture de carbone, dans laquelle le CO₂ est séparé du gaz d'échappement pour obtenir un gaz pauvre en CO₂, dans laquelle l'unité de refroidissement est conçue comme un échangeur de chaleur, dans lequel le gaz d'échappement est refroidi en échange de chaleur avec le gaz pauvre en CO₂ qui est chauffé.

8. Unité de production de ciment selon la revendication 7, comprenant en outre un ou plusieurs broyeurs de cru pour le broyage de la farine brute de ciment, dans laquelle une ligne de sortie de l'installation de capture de carbone est connectée à au moins un des un ou plusieurs broyeurs de cru pour introduire le gaz pauvre en CO₂ provenant de l'installation de capture de carbone dans l'au moins un des un ou plusieurs broyeurs de cru.

9. Unité de production de ciment selon la revendication 7 ou 8, dans laquelle le gaz pauvre en CO₂, après avoir été chauffé, est introduit dans l'au moins un des un ou plusieurs broyeurs de cru.

10. Unité de production de ciment selon la revendication 9, dans laquelle un échangeur de chaleur supplémentaire est prévu pour chauffer le gaz pauvre en CO₂ avant son introduction dans l'au moins un des un ou plusieurs broyeurs de cru.
